(19) Europäisches Patentamt
European Patent Office
Office européen des brevets

(11) **EP 3 859 847 B1**

(12) **EUROPÄISCHE PATENTSCHRIFT**

(45) Veröffentlichungstag und Bekanntmachung des Hinweises auf die Patenterteilung:
**10.01.2024 Patentblatt 2024/02**

(21) Anmeldenummer: **20210188.7**

(22) Anmeldetag: **27.11.2020**

(51) Internationale Patentklassifikation (IPC):
**H01M 8/04014** (2016.01)

(52) Gemeinsame Patentklassifikation (CPC):
**H01M 8/04022;** H01M 2008/1293; H01M 2250/405; Y02B 90/10; Y02E 60/50

(54) **EINSATZ VON FESTOXIDBRENNSTOFFZELLEN BEI PROZESSWÄRMEGENERIERUNG**

USE OF SOLID OXIDE FUEL CELLS IN PROCESS HEAT GENERATION

UTILISATION DE PILES À COMBUSTIBLE À OXYDE SOLIDE DANS LA GÉNÉRATION DE CHALEUR DE PROCESSUS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **30.01.2020 DE 102020201095**

(43) Veröffentlichungstag der Anmeldung:
**04.08.2021 Patentblatt 2021/31**

(73) Patentinhaber: **Robert Bosch GmbH**
**70442 Stuttgart (DE)**

(72) Erfinder:
• **Mueller, Bernd**
**76461 Muggensturm (DE)**
• **Pototzky, Leo**
**97816 Lohr (DE)**
• **Brandenburger, Ralf**
**71729 Erdmannhausen (DE)**

(56) Entgegenhaltungen:
EP-A1- 1 542 301     EP-A1- 1 676 082
WO-A1-2017/129376     JP-A- 2003 132 903

• **MASTROPASQUA LUCA ET AL: "Molten Carbonate Fuel Cells retrofits for CO2 capture and enhanced energy production in the steel industry", INTERNATIONAL JOURNAL OF GREENHOUSE GAS CONTROL, ELSEVIER, AMSTERDAM, NL, Bd. 88, 18. Juni 2019 (2019-06-18), Seiten 195-208, XP085756825, ISSN: 1750-5836, DOI: 10.1016/J.IJGGC.2019.05.033 [gefunden am 2019-06-18]**

EP 3 859 847 B1

## Beschreibung

Die Erfindung betrifft ein System zum Nutzen von Prozesswärme für mindestens einen Wärmeprozess, aufweisend einen Brenner, insbesondere einen Gasbrenner, zum Erzeugen von Wärme, aufweisend mindestens eine Prozesseinheit zum Verwerten eines ersten Teils der von dem Brenner erzeugten Wärme und aufweisend mindestens einen Wärmetauscher zum Transportieren des ersten Teils der von dem Brenner erzeugten Wärme zu der Prozesseinheit. Des Weiteren betrifft die Erfindung ein Verfahren.

### Stand der Technik

Zum direkten Umwandeln von chemisch gebundener Energie in elektrische Energie werden Brennstoffzellensysteme eingesetzt. Brennstoffzellensysteme bestehen üblicherweise aus mehreren Brennstoffzellen, welche durch Wärmetauscher, Zuleitungen und elektrische Kontaktierungen miteinander gekoppelt sind. Insbesondere bieten Hochtemperaturbrennstoffzellen die Möglichkeit der Energieumwandlung ohne den Einsatz von kostenintensiven Elektroden umzusetzen.

Bei unterschiedlichen industriellen Prozessen wird Prozesswärme in Form von Wärmeenergie benötigt. Derartige industrielle Prozesse können beispielsweise Schmelzprozess und Trocknungsprozesse sein. Der Energieverbrauch derartiger Prozesse setzt sich üblicherweise aus einer Energieaufnahme des jeweiligen Vorgangs und aus Energieverlusten zusammen. Bei industriellen Prozessen wird die Hauptenergiesenke üblicherweise durch Energieverluste nach Außen gebildet. Die zum Durchführen der industriellen Prozesse benötigte Wärmemenge bzw. Wärmeenergie wird in der Regel durch den Einsatz von Gasbrennern erzeugt. Zum Reduzieren von Verlusten werden Gasbrenner eingesetzt, bei welchen die Verbrennungszuluft durch Abgaswärmetauscher vorgewärmt wird.

Alternativ sind Verfahren bekannt, bei welchen die Energieverluste durch nachgelagerte Prozesse bzw. sogenannte Wärmekaskaden genutzt werden. Derartige Verfahren zum Reduzieren von Energieverlusten eines industriellen Prozesses sind kostenintensiv und können die entstehenden Energieverluste nur begrenzt kompensieren.

JP 2003132903 offenbart ein System und ein Verfahren zum Nutzen von Wärme eines Brenners in einem Prozesseinheit und zur Erwärmung einer Hochtemperaturbrennstoffzelle.

### Offenbarung der Erfindung

Die der Erfindung zugrundeliegende Aufgabe kann darin gesehen werden, ein System, welches Prozesswärme nutzt, mit reduzierten Energieverlusten vorzuschlagen.

Diese Aufgabe wird mittels des jeweiligen Gegenstands der unabhängigen Ansprüche gelöst. Vorteilhafte Ausgestaltungen der Erfindung sind Gegenstand von jeweils abhängigen Unteransprüchen.

Nach einem Aspekt der Erfindung wird ein System zum Nutzen von Prozesswärme für mindestens einen Wärmeprozess bereitgestellt. Das System weist einen Brenner, insbesondere einen Gasbrenner, zum Erzeugen von Wärme, und mindestens eine Prozesseinheit zum Verwerten eines ersten Teils der von dem Brenner erzeugten Wärme auf. Des Weiteren weist das System mindestens einen Wärmetauscher zum Transportieren des ersten Teils der von dem Brenner erzeugten Wärme zu der Prozesseinheit. Erfindungsgemäß weist das System mindestens ein Hochtemperaturbrennstoffzellensystem auf, welches durch einen zweiten Teil der von dem Brenner erzeugten Wärme auf eine Betriebstemperatur aufheizbar ist.

Nach einem weiteren Aspekt der Erfindung wird ein Verfahren zum Nutzen von Wärme eines Brenners bereitgestellt, wobei eine durch einen Brenner erzeugte Wärme mindestens einer Prozesseinheit zum Durchführen eines Wärmeprozesses zugeführt wird. Eine Betriebsluft eines Hochtemperaturbrennstoffzellensystems wird durch eine Abwärme der Prozesseinheit und/oder eine Abwärme des Brenners erwärmt und dem Hochtemperaturbrennstoffzellensystem zum Erzeugen von elektrischer Energie zugeführt.

Durch das System und das Verfahren kann die Verlustwärme bzw. Energieverluste des eingesetzten Brenners und/oder der mindestens einen Prozesseinheit optimal energetisch nutzen. Hierbei kann das Hochtemperaturbrennstoffzellensystem auf einer optimalen Betriebstemperatur thermisch eingestellt werden. Durch einen gegenüber einer Wärme-Kraft-Maschine höheren Wirkungsgrad von Brennstoffzellensystemen kann die Gesamteffizienz des Systems verbessert werden. Die durch das Hochtemperaturbrennstoffzellensystem erzeugte elektrische Energie kann für unterschiedliche Aufgaben und Arbeitsvorgänge ohne Einschränkungen eingesetzt werden. Darüber hinaus kann ein Umwandeln von mechanischer Arbeit einer Wärme-Kraft-Maschine, wie beispielsweise einer Turbine, in elektrische Energie durch den Einsatz eines Generators entfallen. Aufgrund der reduzierten Anzahl der Komponenten kann das System robuster und kosteneffizienter ausgestaltet sein.

Des Weiteren kann durch den Einsatz des Hochtemperaturbrennstoffzellensystems die Verlustwärme innerhalb eines breiten Temperaturbereichs verwertet werden. Beispielsweise können sogenannte SOFC - Hochtemperaturbrennstoffzellen bei einer Betriebstemperatur von 600 - 850 °C chemische Energie in elektrische Energie umwandeln. Durch den mindestens einen Wärmetauscher werden die den Brennstoffzellen zugeführten Gase, insbesondere Erdgas und Luft, mit einer Abluft des Brenners und/oder der Prozesseinheit für den optimalen Betrieb der verwendeten Brennstoffzellen erwärmt.

Das Abgas des Hochtemperaturbrennstoffzellensystems ist somit auf einem niedrigeren Temperaturniveau als die zugeführte Luft, da die benötigte Energie für die Reformierung des zugeführten Brennstoffs der Brennstoffzellen größer ist als die Verlustleistung bei der elektrochemischen Wandlung des Gases.

Das Hochtemperaturbrennstoffzellensystem kann beispielsweise eine Vielzahl von Hochtemperaturbrennstoffzellen, einen integrierten oder externen Reformer und einen integrierten Wärmetauscher aufweisen.

Bei einem Ausführungsbeispiel ist das Hochtemperaturbrennstoffzellensystem als ein Festoxidbrennstoffzellensystem ausgestaltet. Durch die Ausführung der Brennstoffzellen des Hochtemperaturbrennstoffzellensystems als sogenannte SOF (Solid Oxide Fuel)-Zellen kann ein Wirkungsgrad von bis zu 60% realisiert werden. Hierbei entstehen die thermischen Verluste des Hochtemperaturbrennstoffzellensystems zum wesentlichen Teil bei einer höheren Temperatur von über 600°C und können deshalb effizient für den Prozesswärmebedarf eingesetzt werden.

Es kann eine alternative Ausgestaltung bereitgestellt werden, bei der Abwärme des Hochtemperaturbrennstoffzellensystems zum Bereitstellen von Prozesswärme für die Prozesseinheit eingesetzt wird.

Nach einer weiteren Ausführungsform ist die von dem Brenner erzeugte Wärme über einen Wärmetauscher zu der Prozesseinheit und zu dem Hochtemperaturbrennstoffzellensystem übertragbar. Ein derartiger Wärmetauscher kann somit drei Kreisläufe thermisch miteinander koppeln. Beispielsweise können eine Luftzufuhr zum Hochtemperaturbrennstoffzellensystem, ein durch den Brenner direkt erhitzter Kreislauf und ein Kreislauf der Prozesseinheit miteinander gekoppelt werden. Durch die Verwendung von einem Wärmetauscher kann die Anzahl der für das System benötigten Komponenten reduziert werden.

Gemäß einem weiteren Ausführungsbeispiel ist die von dem Brenner erzeugte Wärme durch einen ersten Wärmetauscher zu der Prozesseinheit, durch einen zweiten Wärmetauscher zu dem Hochtemperaturbrennstoffzellensystem und durch einen dritten Wärmetauscher zu einer Ansaugluft des Brenners übertragbar. Hierdurch können anstelle eines Wärmetauschers drei separate Wärmetauscher mit Aufteilung des Brennerabgases eingesetzt werden. Insbesondere können die jeweiligen Wärmetauscher unterschiedlich leistungsfähig ausgestaltet sein, um gezielt Wärmeübergänge zwischen den jeweiligen Komponenten des Systems zu steuern.

Nach einer weiteren Ausführungsform ist dem Hochtemperaturbrennstoffzellensystem eine Betriebsluft über eine Betriebsluftzufuhr zuführbar, welche durch den mindestens einen Wärmetauscher auf eine Betriebstemperatur des Hochtemperaturbrennstoffzellensystems aufheizbar ist. Hierdurch kann das Hochtemperaturbrennstoffzellensystem insbesondere durch die Verlustwärme des Brenners oder analog über die durch den Brenner bereitgestellte Prozesswärme indirekt erhitzt werden, um die Erzeugung von elektrischer Energie auszuführen.

Gemäß einem weiteren Ausführungsbeispiel ist die Betriebsluft des Hochtemperaturbrennstoffzellensystems durch eine Abwärme des Brenners und/oder der Prozesseinheit aufheizbar. Durch diese Maßnahme kann eine direkte Erhitzung der Betriebsluft des Hochtemperaturbrennstoffzellensystems ermöglicht werden. Je nach Ausgestaltung kann eine Abluft des Brenners unmittelbar als Betriebsluft für die Brennstoffzellen genutzt werden.

Nach einer weiteren Ausführungsform ist das Hochtemperaturbrennstoffzellensystem dazu eingerichtet, basierend auf einem Gas des Brenners und der durch Abwärme aufgeheizten Betriebsluft elektrische Energie zu erzeugen. Der gegenüber einer Kraft-Wärme-Maschine erhöhte Wirkungsgrad von Brennstoffzellen kann hierdurch besonders effizient ausgenutzt werden. Des Weiteren kann durch den Einsatz der Brennstoffzellen die Anzahl von beweglichen und somit wartungsintensiven Komponenten minimiert werden. Durch die regenerative Nutzung der durch den Brenner erzeugten Wärmeenergie kann darüber hinaus eine separate Aufheizung der Hochtemperaturbrennstoffzellen entfallen.

Gemäß einem weiteren Ausführungsbeispiel ist die mindestens eine Prozesseinheit als ein Ofen, eine Schmelzvorrichtung oder eine Sintervorrichtung ausgestaltet. Die Prozesseinheit kann somit die durch den Brenner erzeugte Prozesswärme für die Herstellung oder Behandlung von Bauteilen nutzen.

Im Folgenden werden anhand von stark vereinfachten schematischen Darstellungen bevorzugte Ausführungsbeispiele der Erfindung näher erläutert.

Hierbei zeigen

Fig. 1 eine schematische Darstellung eines Systems gemäß einer ersten Ausführungsform,

Fig. 2 ein Diagramm zum Veranschaulichen einer Änderung einer Effizienz des Systems in Abhängigkeit von einer Leistung eines Hochtemperaturbrennstoffzellensystems und

Fig. 3 eine schematische Darstellung des Systems gemäß einer weiteren Ausführungsform.

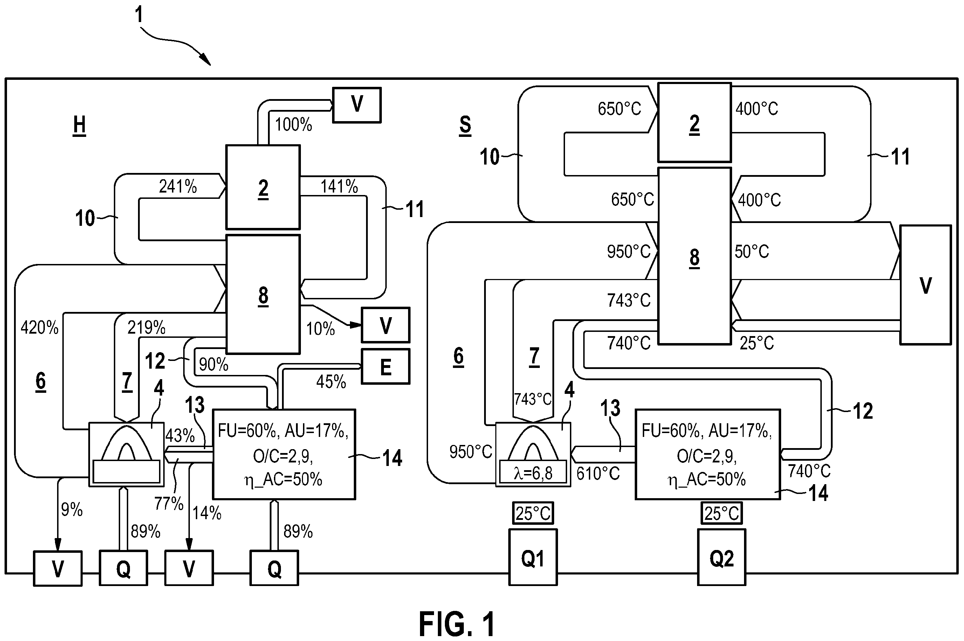

In der Figur 1 ist eine schematische Darstellung eines Systems 1 gemäß einer ersten Ausführungsform gezeigt. Es sind Enthalpieflüsse H und Stoffflüsse S veranschaulicht. Diese energetische Betrachtung des Systems 1 wird beispielhaft mit einem Wärmeprozess bei einer Prozesstemperatur von 400 °C veranschaulicht.

Ein oder mehrere Wärmeprozesse können beispielsweise in Form einer Trocknung, eines Entbinderns, einer Pyrolyse, einer Sinterung, einer Schmelzinfiltration, aber auch in Form von verschiedenen Verfahren aus dem Bereich der Schmelzmetallurgie ausgestaltet sein. Der mindestens eine Wärmeprozess kann durch mindestens eine Prozesseinheit 2 ausgeführt werden.

Das System 1 dient zum Nutzen von Prozesswärme, welche durch einen Brenner 4 erzeugt wird. Der Brenner 4 ist beispielhaft als ein Gasbrenner ausgestaltet. Der Brenner 4 erzeugt Wärmeenergie 6, welche direkt oder über ein Übertragungsfluid einem Wärmetauscher 8 zugeführt wird. Über den Wärmetauscher kann die Wärmeenergie 6 als Prozesswärme 10 zu der Prozesseinheit 2 transportiert werden. Der Transport der Prozesswärme 10 kann ebenfalls über ein nicht beziffertes Übertragungsfluid erfolgen.

Der Wärmetauscher 8 ist im dargestellten Ausführungsbeispiel als ein einteiliger Wärmetauscher 8 für vier Fluidströme 6, 7, 10, 12 ausgeführt und kann nach einem Gegenstromprinzip arbeiten.

Neben der Wärmeenergie 6 und der Prozesswärme 10 kann der Wärmetauscher 8 auch eine Betriebsluftzufuhr 12 eines Brennstoffzellensystems 14 erwärmen und den Brenner 4 mit Luft versorgen.

Das Brennstoffzellensystem 14 ist als ein Hochtemperaturbrennstoffzellensystem ausgestaltet und weist eine Vielzahl von Brennstoffzellen, einen Reformer und einen integrierten Wärmetauscher auf.

Durch die vorgeheizte Betriebsluftzufuhr 12 kann das Brennstoffzellensystem 14 auf eine Betriebstemperatur gebracht und gehalten werden. Der Brenner 4 kann hierbei als ein regenerativer Brenner ausgestaltet sein, welcher die Abluft 7 des Brenners 4 zum Vorheizen von zugeführter Luft nutzt.

Das Brennstoffzellensystem 14 nutzt die Abwärme 11 des der Prozesseinheit 2 und die Abwärme 7 und/oder das Brennerabgas 6 des Brenners 4 zum Heizen der Betriebsluftzufuhr 12. Als Ergebnis kann das Brennstoffzellensystem 14 elektrische Energie E erzeugen und die Verluste bzw. Energieverluste V des Systems 1 reduzieren. Abgase des Brennstoffzellensystems 14 können dem Brenner 4 ebenfalls zugeführt werden.

Als Quelle Q des Brenners 4 und des Brennstoffzellensystems 14 kann beispielsweise Erdgas eingesetzt werden.

Die Enthalpieflüsse H zwischen den Verlusten V, den Quellen Q und den Komponenten des Systems 1 prozentual dargestellt.

Die Stoffflüsse S dienen insbesondere der Veranschaulichung der beispielhaften Temperaturniveaus bei einer Prozesswärme 10 von 400°C.

Der Brenner 4 und das SOFC-System bzw. das Brennstoffzellensystem 14 können je nach Bedarf in der Leistung variiert werden. Der Wärmetauscher 8 kann alternativ zu der integrierten Lösung auch als drei separate Wärmetauscher mit Aufteilung des Brennerabgases 6 ausgeführt werden.

Außer dem Brenner 4 werden die einzelnen Komponenten des Brennstoffzellensystems 14 nicht dargestellt, es werden nur die Schnittstellen nach außen betrachtet. Das Abgas 13 des Brennstoffzellensystems 14 ist auf einem niedrigeren Temperaturniveau als die Betriebsluftzufuhr 12. Der Grund dafür ist, dass die benötigte Energie für die Reformierung des zugeführten Brennstoffs größer ist als die Verlustleistung bei der elektrochemischen Wandlung von 60 % des Gases.

Die Betrachtung der Energieflüsse bzw. Enthalpieflüsse H führt zu einem beispielhaften Gesamtwirkungsgrad von 82 %.

Die Effizienz des zusätzlich integrierten Brennstoffzellensystems 14 ist definiert durch einen Quotient aus elektrischen Leistungsabgabe $P_{el}$ und dem Zusatzaufwand gegenüber einer Referenzkonfiguration ohne ein SOFC- bzw. ein Brennstoffzellensystem 14 mit einem Rekuperationsbrenner.

$$\eta_{SOFC\_reku} = \frac{P_{el}}{h_{in,SOFC\_reku} - h_{in,reku}}$$

Im vorliegenden Beispiel:

$$\eta_{SOFC\_reku} = \frac{45\%}{(89\% + 89\%) - 116\%} = 72\%$$

Dies bedeutet, dass nach Integration des Brennstoffzellensystems 14 in einen Rekuperationsbrenner der Mehraufwand an Gas zu 72 % zu elektrischer Energie gewandelt werden kann. Durch diese Integration kann ein beispielhafter derzeitig verfügbarer elektrischer Wirkungsgrad von Brennstoffzellensystemen von 50% um über 40% verbessert werden.

Diese Berechnungen gilt für die Aufteilung des Erdgases als Energiequelle Q zu gleichen Teilen bei der Zuführung zum Brenner 4 und zu dem Brennstoffzellensystem 14.

Bei einer vorteilhaften Ausgestaltung kann eine dynamische Variation der Gasaufteilung zwischen dem Brenner 4 und zu dem Brennstoffzellensystem 14 umgesetzt werden. Hierdurch kann der Wirkungsgrad λ des Systems 1 angepasst werden.

Die Stoffflüsse S der jeweiligen Medien weisen eine Breite auf, welche proportional zu der Durchflussmenge ist. Die jeweiligen Temperaturen der verwendeten Gase und Abgase sind in der Figur 1 vermerkt.

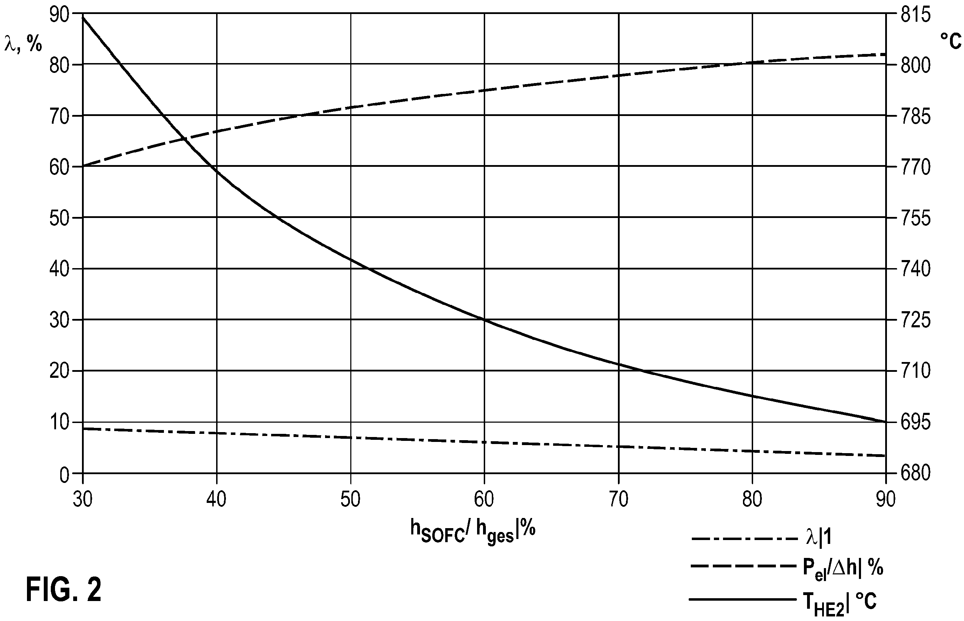

Die Figur 2 zeigt ein Diagramm einer beispielhaften Effizienzberechnung bei unterschiedlichem Anteil der SOFC-Eingangsleitung in Form einer spezifischen Enthalpie einer Gasaufteilung $h_{ges}$. Die Gasaufteilung $h_{ges}$ wird hier aus einem Quotienten der spezifischen Enthalpien

$$h_{ges} = h_{Q2}/(h_{Q1} + h_{Q2})$$

berechnet, welche durch ein dem Brenner 4 zugeführtes Erdgas Q1 und ein dem Brennstoffzellensystem 14 zugeführtes Erdgas Q2 als Energiequellen zugeführt werden.

Neben dem Wirkungsgrad λ des Systems 1 wird

die elektrische Leistungsabgabe $P_{el}$ und die Temperatur $T_{HE2}$ der durch den Wärmetauscher 8 geheizten Betriebsluftzufuhr 12 des Brennstoffzellensystems 14 in Abhängigkeit von dem Quotient $h_{SOFC}/h_{ges}$ dargestellt.

Die Effizienz des in das System 1 integrierten Brennstoffzellensystems 14 kann von 60 % auf bis über 80 % erhöht werden. Die Effizienz hängt im Wesentlichen von der Nennleistung des Brennstoffzellensystems 14 im Verhältnis zur benötigten Wärmeleistung ab. Für diese Berechnungen wurde ein Brennstoffzellensystems 14 mit einem Gesamtwirkungsgrad von 50 % zu Grunde gelegt.

Die Berechnung der Effizienz in Figur 2 bezieht sich auf eine konstante Brennerausgangstemperatur 6 von 950 °C. Die Erhöhung der Brennerausgangstemperatur 6 führt ebenfalls zu einer Erhöhung der Effizienz.

Die angegebenen Temperaturdaten für den Wärmeprozess sind willkürlich gewählt, um die Zusammenhänge des Systems 1 zu verdeutlichen. Beispielsweise kann die Prozesstemperatur 10 höher oder niedriger eingestellt werden.

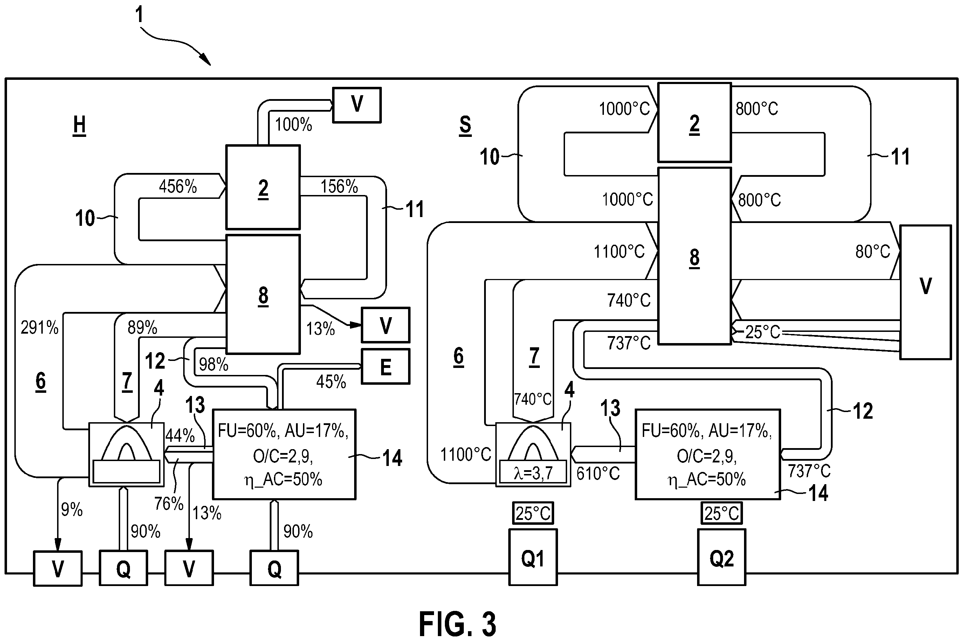

In der Figur 3 ist eine schematische Darstellung des Systems 1 gemäß einer zweiten Ausführungsform dargestellt. Im zweiten Ausführungsbeispiel weist das System eine Prozesstemperatur von 800°C auf. Durch die Figur 3 wird verdeutlicht, dass eine Prozesstemperatur von über 500°C vorteilhaft ist, da die Effizienz steigt. Beispielsweise kann durch das Erhöhen der benötigten Prozesstemperatur und damit auch der Brennertemperatur die Effizienz des integrierten Brennstoffzellensystems 14 von 72% auf 89% (45% / ((90% + 90%) - 130%)). erhöht werden.

Dabei existiert für die Prozesstemperatur keine limitierende Untergrenze. Die Obergrenze der Prozesstemperatur wird durch die mögliche Brenneraustrittstemperatur begrenzt. Je geringer die Differenz zwischen der Prozesstemperatur und der Brenneraustrittstemperatur ist, desto höher ist die Anforderung an die Leistungsübertragung des Wärmetauschers.

**Patentansprüche**

1. System (1) zum Nutzen von Prozesswärme (10) für mindestens einen Wärmeprozess, aufweisend einen Brenner (4), insbesondere einen Gasbrenner, zum Erzeugen von Wärme, aufweisend mindestens eine Prozesseinheit (2) zum Verwerten eines ersten Teils (10) der von dem Brenner (4) erzeugten Wärme und aufweisend mindestens einen Wärmetauscher (8) zum Transportieren des ersten Teils (10) der von dem Brenner erzeugten Wärme zu der Prozesseinheit (2), **dadurch gekennzeichnet, dass** das System (1) mindestens ein Hochtemperaturbrennstoffzellensystem (14) aufweist, welches durch einen zweiten Teil (12) der von dem Brenner (4) erzeugten Wärme auf eine Betriebstemperatur aufheizbar ist.

2. System nach Anspruch 1, wobei das Hochtemperaturbrennstoffzellensystem (14) als ein Festoxidbrennstoffzellensystem ausgestaltet ist.

3. System nach Anspruch 1 oder 2, wobei die von dem Brenner (4) erzeugte Wärme über einen Wärmetauscher (8) zu der Prozesseinheit (2) und zu dem Hochtemperaturbrennstoffzellensystem (14) übertragbar ist.

4. System nach Anspruch 1 oder 2, wobei die von dem Brenner (4) erzeugte Wärme durch einen ersten Wärmetauscher zu der Prozesseinheit (2), durch einen zweiten Wärmetauscher zu dem Hochtemperaturbrennstoffzellensystem (14) und durch einen dritten Wärmetauscher zu einer Ansaugluft des Brenners (4) übertragbar ist.

5. System nach einem der Ansprüche 1 bis 4, wobei dem Hochtemperaturbrennstoffzellensystem (14) eine Betriebsluft über eine Betriebsluftzufuhr (12) zuführbar ist, welche durch den mindestens einen Wärmetauscher (8) auf eine Betriebstemperatur des Hochtemperaturbrennstoffzellensystems (14) aufheizbar ist.

6. System nach Anspruch 5, wobei die Betriebsluft durch eine Abwärme des Brenners (4) und/oder der Prozesseinheit (2) aufheizbar ist.

7. System nach Anspruch 5 oder 6, wobei das Hochtemperaturbrennstoffzellensystem (14) dazu eingerichtet ist, basierend auf einem Gas des Brenners (4) und der durch Abwärme aufgeheizten Betriebsluft elektrische Energie zu erzeugen.

8. System nach einem der Ansprüche 1 bis 7, wobei die mindestens eine Prozesseinheit (2) als ein Ofen, eine Schmelzvorrichtung oder eine Sintervorrichtung ausgestaltet ist.

9. Verfahren zum Nutzen von Wärme eines Brenners (4), wobei eine durch einen Brenner (4) erzeugte Wärme mindestens einer Prozesseinheit (2) zum Durchführen eines Wärmeprozesses zugeführt wird, eine Betriebsluft eines Hochtemperaturbrennstoffzellensystems (14) durch eine Abwärme der Prozesseinheit (2) und/oder eine Abwärme des Brenners (4) erwärmt und dem Hochtemperaturbrennstoffzellensystem (14) zum Erzeugen von elektrischer Energie zugeführt wird, **dadurch gekennzeichnet, dass** der Brenner (4) Wärmeenergie erzeugt, welche einem Wärmetauscher (8) zugeführt wird und über den Wärmetauscher (8) als Prozesswärme (10) zu der Prozesseinheit (2) transportiert wird.

**Claims**

1. System (1) for utilizing process heat (10) for at least one heating process, comprising a burner (4), in particular a gas burner, for generating heat, comprising at least one process unit (2) for using a first portion (10) of the heat generated by the burner (4), and comprising at least one heat exchanger (8) for transporting the first portion (10) of the heat generated by the burner to the process unit (2), **characterized in that** the system (1) has at least one high-temperature fuel cell system (14) which can be heated to an operating temperature by a second portion (12) of the heat generated by the burner (4).

2. System according to Claim 1, wherein the high-temperature fuel cell system (14) is designed as a solid oxide fuel cell system.

3. System according to Claim 1 or 2, wherein the heat generated by the burner (4) can be transferred via a heat exchanger (8) to the process unit (2) and to the high-temperature fuel cell system (14).

4. System according to Claim 1 or 2, wherein the heat generated by the burner (4) can be transferred by a first heat exchanger to the process unit (2), by a second heat exchanger to the high-temperature fuel cell system (14) and by a third heat exchanger to intake air of the burner (4) .

5. System according to one of Claims 1 to 4, wherein operating air can be supplied to the high-temperature fuel cell system (14) via an operating air supply (12) and can be heated to an operating temperature of the high-temperature fuel cell system (14) by the at least one heat exchanger (8).

6. System according to Claim 5, wherein the operating air can be heated by waste heat from the burner (4) and/or the process unit (2).

7. System according to Claim 5 or 6, wherein the high-temperature fuel cell system (14) is configured to generate electrical energy based on a gas from the burner (4) and the operating air heated by waste heat.

8. System according to one of Claims 1 to 7, wherein the at least one process unit (2) is designed as a furnace, a melting device or a sintering device.

9. Method for utilizing heat from a burner (4), wherein heat generated by a burner (4) is supplied to at least one process unit (2) for carrying out a heating process, operating air of a high-temperature fuel cell system (14) is heated by waste heat from the process unit (2) and/or waste heat from the burner (4) is heated and supplied to the high-temperature fuel cell system (14) in order to generate electrical energy, **characterized in that** the burner (4) generates thermal energy which is supplied to a heat exchanger (8) and is transported as process heat (10) to the process unit (2) via the heat exchanger (8).

**Revendications**

1. Système (1) pour utiliser une chaleur de processus (10) pour au moins un processus thermique, présentant un brûleur (4), notamment un brûleur à gaz, pour produire de la chaleur, présentant au moins une unité de processus (2) pour utiliser une première partie (10) de la chaleur produite par le brûleur (4) et présentant au moins un échangeur de chaleur (8) pour transporter la première partie (10) de la chaleur produite par le brûleur vers l'unité de processus (2), **caractérisé en ce que** le système (1) présente au moins un système de pile à combustible à haute température (14) qui peut être chauffé à une température de fonctionnement par une deuxième partie (12) de la chaleur produite par le brûleur (4).

2. Système selon la revendication 1, dans lequel le système de pile à combustible à haute température (14) est conçu sous la forme d'un système de pile à combustible à oxyde solide.

3. Système selon la revendication 1 ou 2, dans lequel la chaleur produite par le brûleur (4) peut être transférée à l'unité de processus (2) et au système de pile à combustible à haute température (14) par l'intermédiaire d'un échangeur de chaleur (8).

4. Système selon la revendication 1 ou 2, dans lequel la chaleur produite par le brûleur (4) peut être transférée à l'unité de processus (2) par un premier échangeur de chaleur, au système de pile à combustible à haute température (14) par un deuxième échangeur de chaleur, et à un air d'aspiration du brûleur (4) par un troisième échangeur de chaleur.

5. Système selon l'une quelconque des revendications 1 à 4, dans lequel un air de fonctionnement peut être amené au système de pile à combustible à haute température (14) par l'intermédiaire d'une amenée d'air de fonctionnement (12), qui peut être chauffé à une température de fonctionnement du système de pile à combustible à haute température (14) par l'au moins un échangeur de chaleur (8) .

6. Système selon la revendication 5, dans lequel l'air de fonctionnement peut être chauffé par une chaleur perdue du brûleur (4) et/ou de l'unité de processus (2).

**7.** Système selon la revendication 5 ou 6, dans lequel le système de pile à combustible à haute température (14) est adapté pour produire de l'énergie électrique sur la base d'un gaz du brûleur (4) et de l'air de fonctionnement chauffé par la chaleur perdue.

**8.** Système selon l'une quelconque des revendications 1 à 7, dans lequel l'au moins une unité de processus (2) est conçue sous la forme d'un four, d'un dispositif de fusion ou d'un dispositif de frittage.

**9.** Procédé d'utilisation de la chaleur d'un brûleur (4), dans lequel une chaleur produite par un brûleur (4) est amenée à au moins une unité de processus (2) pour réaliser un processus thermique, un air de fonctionnement d'un système de pile à combustible à haute température (14) est chauffé par une chaleur perdue de l'unité de processus (2) et/ou une chaleur perdue du brûleur (4) et est amené au système de pile à combustible à haute température (14) pour produire de l'énergie électrique, **caractérisé en ce que** le brûleur (4) produit de l'énergie thermique qui est amenée à un échangeur de chaleur (8) et qui est transportée vers l'unité de processus (2) par l'intermédiaire de l'échangeur de chaleur (8) en tant que chaleur de processus (10).

FIG. 1

FIG. 2

FIG. 3

EP 3 859 847 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- JP 2003132903 B